(19) Europäisches Patentamt
European Patent Office
Office européen des brevets

(11) Veröffentlichungsnummer: **0 432 561 B1**

# (12) EUROPÄISCHE PATENTSCHRIFT

(45) Veröffentlichungstag der Patentschrift: **07.06.95**

(51) Int. Cl.$^{6}$: **C08G 63/00**, C08L 67/00, C08L 81/00, C08G 75/00, C08G 81/00

(21) Anmeldenummer: **90122583.9**

(22) Anmeldetag: **27.11.90**

Die Akte enthält technische Angaben, die nach dem Eingang der Anmeldung eingereicht wurden und die nicht in dieser Patentschrift enthalten sind.

## (54) Pfropfcokondensate aus Polyarylensulfidrückgraten und flüssigkristallinen Seitenketten.

(30) Priorität: **09.12.89 DE 3940793**

(43) Veröffentlichungstag der Anmeldung:
**19.06.91 Patentblatt 91/25**

(45) Bekanntmachung des Hinweises auf die Patenterteilung:
**07.06.95 Patentblatt 95/23**

(84) Benannte Vertragsstaaten:
**BE DE FR GB IT**

(56) Entgegenhaltungen:
**EP-A- 0 034 550**
**FR-A- 2 470 780**

**MAKROMOLEKULARE CHEMIE, MACROMOLECULAR SYMPOSIA, Band 26, März 1989, Seiten 1-8; W. HEITZ: "Block copolymers with LC-segments"**

**WPIL, FILE SUPPLIER, AN=90-011670/02, Derwent Publications Ltd, London, GB; & JP-A-1 292 058**

**WPIL, FILE SUPPLIER, AN=87-216301/31, Derwent Publications Ltd, London, GB; & JP-A-62 141 064**

(73) Patentinhaber: **BAYER AG**

**D-51368 Leverkusen (DE)**

(72) Erfinder: **Köhler, Burkhard, Dr.**
**Mündelheimer Strasse 94**
**W-4150 Krefeld 11 (DE)**
Erfinder: **Wehrmann, Rolf, Dr.**
**Scheiblerstrasse 81**
**W-4150 Krefeld 1 (DE)**
Erfinder: **Pielartzik, Harald, Dr.**
**Doerperhofstrasse 39**
**W-4150 Krefeld (DE)**
Erfinder: **Heinz, Hans-Detlef, Dr.**
**Breslauer Strasse 31**
**W-4150 Krefeld 11 (DE)**
Erfinder: **Ebert, Wolfgang, Dr.**
**Doerperhofstrasse 31**
**W-4150 Krefeld (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 432 561 B1

## Beschreibung

Die Erfindung betrifft Pfropfcokondensate aus Polyarylensulfidrückgraten und flüssigkristallinen Polyester(LCP)-Seitenketten.

LCP-Polymere weisen ein hohes Modulniveau, aber eine geringe Flexibilität (Randfaserdehnung, Reißdehnung) auf. Polyarylensulfide besitzen eine bessere Flexibilität bei niedrigerem Modulniveau. Wünschenswert wären daher Materialien, die die Vorteile beider Polymeren vereinen.

Es wurde nun gefunden, daß sich Carboxylgruppen- und/oder Dicarbonsäureanhydridgruppen- und/oder Hydroxygruppen-und/oder Aminogruppen-modifizierte Polyarylensulfidrückgrate mit Bisphenoldiacetaten und Disäuren und/oder Acetoxycarbonsäure zu LCP-gepfropften Polyarylensulfiden (PAS), vorzugsweise Polyphenylensulfiden (PPS), umsetzen lassen, die eine hohe Randfaserdehnung aufweisen. Gegenstand der Erfindung sind daher Pfropfcokondensate aus mit Carboxylgruppen und/oder Dicarbonsäureanhydridgruppen und/oder Hydroxygruppen und/oder Aminogruppen modifizierten Polyarylensulfidrückgraten der Schmelzviskositäten 5-1000 Pas (gemessen bei 306 °C, 1000 l/s Scherung) und flüssigkristallinen Polyester(LCP)-Seitenketten welche erhältlich sind, indem die modifizierten Polyarylensulfidrückgrate mit

A aromatischen Hydroxy- oder Aminocarbonsäuren, Diphenolen, Aminophenolen, aromatischen Dicarbonsäuren oder Kohlensäureestern

B oder deren OH-funktionalisierten Derivaten wie z.B. Estern mit aliphatischen Carbonsäuren oder aromatischen Dicarbonsäuren, bevorzugt mit Acetaten oder Diacetaten,

C oder den entsprechenden an der Carboxylgruppe derivatisierten Verbindungen, bevorzugt Arylestern mit Diphenolen oder Aminophenolen,

D oder mit aus den erwähnten Bausteinen hergestellten höhermolekularen LCP

unter geeigneten Reaktionsbedingungen so zur Reaktion gebracht werden, daß eine kovalente Bindung zwischen den Polyarylensulfidrückgraten und LCP-Seitenketten gebildet wird, wobei der Gewichtsanteil der Polyarylensulfidrückgrate 3-97 %, vorzugsweise 5-50 %, am Pfropfcokondensat beträgt und wobei die modifizierten Polyarylensulfidrückgrate durch Reaktion von 0,5-10 Gew.-% an Sulfonsäure- oder Nitrogruppen-haltigen Aromaten der Formel (I)

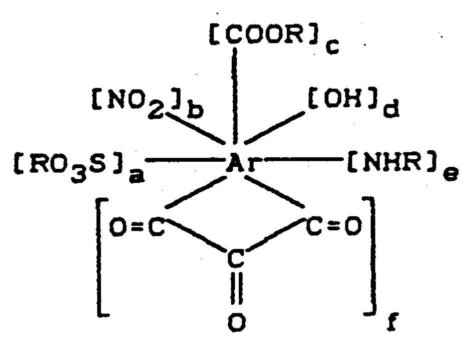 (I),

wobei

- Ar für einen $C_6$-$C_{20}$-Arylrest steht,
- R für Wasserstoff, einen $C_1$-$C_{22}$-Alkyl- oder einen $C_1$-$C_{14}$-Acyl- oder einen $C_6$-$C_{14}$-Arylrest, vorzugsweise für Wasserstoff steht,
- a gleich 0, 1, 2 oder 3 ist,
- b gleich 0, 1, 2 oder 3 ist,
- c gleich 0, 1, 2 oder 3 ist,
- d gleich 0, 1, 2 oder 3 ist,
- e gleich 0, 1, 2 oder 3 ist,
- f gleich 0 oder 1 ist,

die Summe (a + b) größer 0 und kleiner 4 ist und die Summe (c + d + e + f) größer 0 und kleiner 4 ist und die Summe (a + b + c + d + e + f) größer 1 und kleiner 7 ist und gegebenenfalls vorhandene freie Valenzen des Restes Ar durch Wasserstoff, $C_1$-$C_{22}$-Alkyl oder $C_6$-$C_{14}$-Aryl oder Halogen, vorzugsweise durch Wasserstoff substiutiert sind, mit Polyarylensulfiden bei Temperaturen oberhalb des Schmelzpunktes des jeweiligen Polyarylensulfids bis zu 450 °C erhältlich sind.

Die Herstellung der erfindungsgemäßen Polyarylensulfidrückgrate erfolgt vorzugsweise durch Extrusion des Polyarylensulfids, bevorzugt des Polyphenylensulfids, (hergestellt z.B. nach EP-A 171 021), mit den

Aromaten der Formel (I) bei 300 bis 350 °C.

Dabei entstehen funktionalisierte Polyarylensulfidrückgrate, indem die Nitro- und/oder Sulfonsäuregruppen des Aromaten der Formel (I) mit der Hauptkette des Polyarylensulfids reagieren, während die Carboxyl-, Anhydrid-, Amino- oder OH-Funktion des Aromaten für die erfindungsgemäßen Pfropfreaktionen zur Verfügung stehen.

Die Herstellung der erfindungsgemäßen Pfropfcokondensate erfolgt in der bevorzugten Ausführungsform durch Reaktion der funktionalisierten Polyarylensulfidrückgrate mit 4-Hydroxybenzoesäure und/oder Dihydroxybiphenyl und/oder Tere- und/oder Isophthalsäure und/oder Hydrochinon und/oder anderen Bausteinen in Gegenwart von Acetanhydrid als Kondensationsmittel bei Temperaturen von 170 bis 330 °C unter Anlegen von Vakuum in der letzten Phase der Reaktion.

Auch Diphenylcarbonat kann als Kondensationsreagenz eingesetzt werden.

Als Bausteine für die flüssigkristallinen Seitenketten kommen

a) aromatische Hydroxycarbonsäuren,
b) aromatische Aminocarbonsäuren,
c) Diphenole,
d) Aminophenole,
e) aromatische Dicarbonsäuren und
f) gegebenenfalls Kohlensäure oder deren Derivate in Betracht.

Als aromatische Hydroxycarbonsäuren a) kommen z.B. Verbindungen der Formeln (II) und (III)

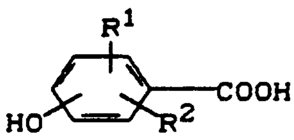

(II),

und

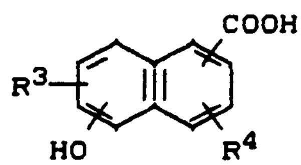

(III),

,

worin

$R^1$ bis $R^4$ — $C_1$-$C_4$-Alkyl, vorzugsweise Methyl, Ethyl, $C_1$-$C_4$-Alkoxy, vorzugsweise Methoxy, Ethoxy, $C_6$-$C_{10}$-Aryl oder -Aryloxy, vorzugsweise Phenyl, Phenyloxy, Naphthyl, Naphthyloxy, Biphenyl, Biphenyloxy, Tolyl, Tolyloxy, $C_7$-$C_{12}$-Alkylaryl, vorzugsweise Benzyl, Halogen, vorzugsweise Chlor und Brom oder Wasserstoff bedeuten,

in Frage.

Bevorzugte aromatische Hydroxycarbonsäuren (a) sind z.B. 4-Hydroxy-3-methylbenzoesäure, 4-Hydroxy-3-phenylbenzoesäure, 4-Hydroxy-2-ethylbenzoesäure, 3-Chlor-4-hydroxybenzoesäure, 3-Brom-4-hydroxybenzoesäure, 4-Hydroxy-3-methoxybenzoesäure, 4-Hydroxybenzoesäure, 6-Hydroxynaphthoesäure, 4-Hydroxy-3-phenoxybenzoesäure, 6-Hydroxy-5-chlor-2-naphthoesäure, 6-Hydroxy-5-methyl-2-naphthoesäure, 6-Hydroxy-5-methoxy-2-naphthoesäure, 6-Hydroxy-4,7-dichlor-2-naphthoesäure und 2-Hydroxybenzoesäure; besonders bevorzugt sind 4-Hydroxybenzoesäure und 6-Hydroxynaphthoesäure.

Als gegebenenfalls substituierte 3-Hydroxybenzoesäuren (a) werden z.B. genannt: 3-Hydroxy-4-methylbenzoesäure, 3-Hydroxy-4-phenylbenzoesäure, 3-Hydroxy-2-ethylbenzoesäure, 4-Chlor-3-hydroxybenzoesäure, 4-Brom-3-hydroxybenzoesäure, 3-Hydroxy-4-methoxybenzoesäure, 3-Hydroxy-4-phenoxybenzoesäure, 3-Hydroxy-2-methoxybenzoesäure und 3-Hydroxybenzoesäure.

Besonders bevorzugte aromatische 3-Hydroxycarbonsäuren (a) sind unsubstituierte Hydroxycarbonsäuren, wie 3-Hydroxybenzoesäure.

Als aromatische Aminocarbonsäuren b) kommen z.B. Verbindungen der Formeln (IV) und (V)

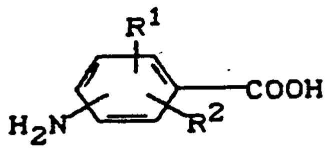

und

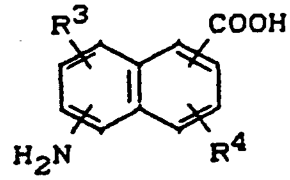

,

(IV), (V),

worin

R[1] bis R[4] $C_1$-$C_4$-Alkyl, vorzugsweise Methyl, Ethyl, $C_1$-$C_4$-Alkoxy, vorzugsweise Methoxy, Ethoxy, $C_6$-$C_{10}$-Aryl oder -Aryloxy vorzugsweise Phenyl, Phenyloxy, Naphthyl, Naphthyloxy, Biphenyl, Biphenyloxy, Tolyl, Tolyloxy, $C_7$-$C_{12}$-Alkylaryl, vorzugsweise Benzyl, Halogen vorzugsweise Chlor und Brom oder Wasserstoff bedeuten

in Frage.

Bevorzugte aromatische Aminocarbonsäuren sind 2-Aminobenzoesäure, 3-Aminobenzoesäure, 4-Aminobezoesäure, 4-Chlorantnranilsäure, 5-Chloranthranilsäure, 3-Amino-4-chlorbenzoesäure, 3-Amino-4-methylbenzoesäure, 4-Amino-3-methylbenzoesäure, 4-Amino-3-phenylbenzoesäure, 3-Brom-4-aminobenzoesäure, 4-Amino-3-methoxybenzoesäure, 6-Aminonaphthoesäure, 4-Amino-3-phenoxybenzoosäure, 6-Amino-5-chlor-2-naphthoesäure, 6-Amino-5-methyl-2-naphthoesäure, 6-Amino-5-methoxy-2-naphthoesäure, 6-Amino-4,7-dichlor-2-naphthoesäure.

Besonders bevorzugte aromatische Aminocarbonsäuren sind 4-Aminobenzoesäure, 3-Aminobenzoesäure und 6-Amino-2-naphthoesäure.

Als Diphenole c) kommen solche der Formel (VI)

$$HO - Z^1 - OH \quad (VI),$$

in Frage, worin

Z[1] einen zweiwertigen ein- oder mehrkernigen aromatischen Rest mit 6-30 C-Atomen bedeutet, wobei $Z^1$ derart gebaut ist, daß die beiden OH-Gruppen direkt an je ein C-Atom eines aromatischen Systems gebunden sind.

Die aromatischen Reste können durch 1 bis 4 $C_1$-$C_4$-Alkyl-, $C_1$-$C_4$-Alkoxy, Phenyl-, Phenoxy-, Benzyl- oder Halogenreste (vorzugsweise Chlor und Brom) substituiert sein und umfassen neben Phenylen, Naphthylen und Biphenylen auch durch Sauerstoff, Schwefel, Carbonyl, Sulfonyl, $C_1$-$C_4$-Alkylen oder -Alkyliden, Cyclohexylen oder -hexyliden oder $-O(CH_2)_nO-$ (n = 2, 3, 4) verbundene Phenylenreste.

Bevorzugte Diphenole c) sind z.B. Hydrochinon, 4,4'-Dihydroxydiphenyl, 4,4'-Dihydroxydiphenylether, 4,4'-Dihydroxydiphenylethan, 4,4'-Dihydroxydiphenoxyethan, 3,5'-Dihydroxydiphenyl, 3,5'-Dihydroxydiphenylether, 1,5-Dihydroxynaphthalin, 2,6-Dihydroxynaphthalin, 1,4-Dihydroxynaphthalin, Chlorhydrochinon, Bromhydrochinon, Methylhydrochinon, Phenylhydrochinon, Ethylhydrochinon, 2,2'-Dimethyl-4,4'-dihydroxydiphenyl, 3,3',5,5'-Tetramethyl-4,4'-dihydroxydiphenyl, 3,5'-Dimethoxy-4,4'-dihydroxydiphenylether, 1,2-(2-Chlor-4-hydroxyphenoxy)ethan, 4-Methoxy-2,6-dihydroxynaphthalin, Resorcin, 3,4'-Dihydroxydiphenyl, 3,4'-Dihydroxydiphenylether, 3,4'-Dihydroxydiphenoxyethan, 1,3-Dihydroxynaphthalin, 1,6-Dihydroxynaphthalin, 1,7-Dihydroxynaphthalin, 2,7-Dihydroxynaphthalin, 4-Chlorresorcin, 4-Bromresorcin, 4-Methylresorcin, 4-Phenylresorcin, 4-Ethoxyresorcin, 2,5-Dichlor-1,6-dihydroxynaphthalin und 4-Methoxy-2,7-dihydroxynaphthalin.

Besonders bevorzugte Diphenole c) sind Hydrochinon und 4,4'-Dihydroxydiphenyl.

Erfindungsgemäß geeignete Diphenole der Formel (VI) haben eine gewinkelte Struktur, wie z.B. Diphenyle der Formel (VII)

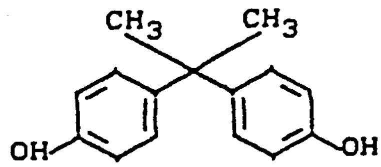

(VIIa).

Die aromatischen Reste können durch 1 bis 4 $C_1$-$C_4$-Alkyl-, $C_1$-$C_4$-Alkoxy-, Phenyl-, Phenoxy-, Benzyl- oder Halogenreste (vorzugsweise Chlor und Brom) substituiert sein und umfassen neben Phenylen, Naphthylen und Biphenylen auch durch Sauerstoff, Schwefel, Carbonyl, Sulfonyl, $C_1$-$C_4$-Alkylen oder -Alkyliden, Cyclohexylen oder -hexyliden oder $-O(CH_2)_nO-$ (n = 2, 3, 4) verbundene Phenylenreste.

Aminophenole d) entsprechen der Formel (VIII)

$HO-Z^3-NH_2$ (VIII),

wobei

$Z^3$ die bei den Formeln (VI) und (VII) für $Z^1$ und $Z^2$ angegebene Bedeutung hat.

Bevorzugte Aminophenole d) sind: 3-Aminophenol, 5-Amino-2-chlorphenol, 4-Aminophenol, 3-Amino-2-methylphenol, 3-Amino-4-methylphenol, 5-Amino-1-naphthol, 6-Amino-1-naphthol, 5-Amino-2-naphthol, 7-Amino-2-naphthol, 8-Amino-2-naphthol, 6-Amino-2-naphthol, 4-Amino-1-hydroxybiphenyl.

Als aromatische Dicarbonsäuren e) kommen solche der Formel (IX)

HOOC - A - COOH (IX),

in Frage, worin

A einen bivalenten aromatischen Rest mit 6 bis 24 C-Atomen, vorzugsweise mit 6 bis 16 C-Atomen bedeutet. Die bivalenten aromatischen Reste können durch 1 bis 4 $C_1$-$C_4$-Alkyl-, $C_1$-$C_4$-Alkoxy, Phenyl-, Phenoxy-, Benzyl- oder Halogenreste (vorzugsweise Chlor und Brom) substituiert sein und umfassen neben Phenylen, Naphthylen und Biphenylen auch durch Sauerstoff, Schwefel, Carbonyl, Sulfonyl, $C_1$-$C_4$-Alkylen oder -Alkyliden, Cyclohexylen oder -hexyliden oder $-O(CH_2)_bO-$ (n = 1, 2, 3, 4) verbundene Phenylenreste.

Bevorzugte aromatische Reste sind z.B. 1,4-Phenylen, 1,4-Naphthylen oder 4,4'-Biphenylen, worin die beiden Bindungen sich koaxial in entgegengesetzte Richtungen erstrecken, oder 1,5-Naphthylen, 2,6-Naphthylen oder 3,5'-Biphenylen, worin die beiden in entgegengesetzte Richtungen zeigenden Bindungen parallel zueinander verschoben sind, sowie 1,3-Phenylen, 1,3-, 1,6-, 1,7- oder 2,7-Naphthylen oder 3,4'-Biphenylen, worin die beiden Bindungen nicht an benachbarten Atomen lokalisiert sind und sich nicht koaxial oder parallel verschoben in entgegengesetzte Richtungen erstrecken.

Bevorzugte aromatische Dicarbonsäuren e) sind z.B. 1,4-Naphthalindicarbonsäure, 1,5-Naphthalindicarbonsäure, 2,6-Naphthalindicarbonsäure, Biphenyl-4,4'-dicarbonsäure, Biphenyl-3,3'-dicarbonsäure, Diphenoxyethan-4,4'-dicarbonsäure, Diphenylether-4,4'-dicarbonsäure, Methylterephthalsäure, Methoxyterephthalsäure, Chlorterephthalsäure, 4-Chlornaphthalin-2,7-dicarbonsäure, 1,3-Naphthalindicarbonsäure, 1,6-Naphthalindicarbonsäure, 1,7-Naphthalindicarbonsäure, 2,7-Naphthalindicarbonsäure, Biphenyl-3,4'-dicarbonsäure, Diphenylether-3,4'-dicarbonsäure, 4-Methylisophthalsäure, 5-Methylisophthalsäure, Diphenylether-4,4'-dichlor-3,3'-dicarbonsäure, Iso- und Terephthalsäure.

Besonders bevorzugte aromatische Dicarbonsäuren e) sind Iso- und Terephthalsäure.

Als Derivate zum Einbau der Carbonatgruppen f) seien genannt: Diarylcarbonate, wie Diphenylcarbonat, Ditolylcarbonat, Phenyl-tolyl-carbonat und Dinaphthylcarbonat, Dialkylcarbonate, wie Diethylcarbonat, Dimethylcarbonat, Dimethyldicarbonat und Diethyldicarbonat sowie Glykolcarbonat.

Ein bevorzugtes Derivate zum Einbau der Carbonatgruppen f) ist Diphenylcarbonat.

Als Endgruppen können die Polyestercarbonate H, OH, $OC_6H_5$ Reste enthalten.

Erfindungsgemäß verwendbare Polyarylensulfide, vorzugsweise Polyphenylensulfid sind z.B. aus der EP-A 171 021 bekannt. Sie haben Schmelzviskositäten von 5 bis 1000 Pas (gemessen bei 306 °C, 1000 l/s Scherung).

Herstellungsverfahren für LC-Polymere sind bekannt. LC-Polyester und Polyesteramid werden z.B. durch Schmelzumesterung nach dem Acetatverfahren hergestellt z.B. EP-A 102 719, 134 204, EP-A 63 880, 67 032.

LC-Polyester und Polyestercarbonate können auch durch Schmelzumesterung nach dem Phenylesterverfahren hergestellt werden, z.B. US-A 4 371 600, 4 435 561, EP-A 015 856, 132 637, DE-A 2 704 315.

Die erfindungsgemäßen Pfropfcokondensate sind durch Kondensationsverfahren erhältlich, wobei die Polyarylensulfidrückgrate A) mit aromatischen Hydroxy- oder Aminocarbonsäuren,

Diphenolen, Aminophenolen, aromatischen Dicarbonsäuren oder Kohlensäureestern

B) oder deren OH-funktionalisierten Derivaten wie z.B. aliphatischen Carbonsäureestern, vorzugsweise mit Acetaten oder Diacetaten, oder aromatischen Dicarbonsäureestern,

C) oder den entsprechenden an der Carboxylgruppe derivatisierten Verbindungen, vorzugsweise den Arylestern von Diphenolen oder Aminophenolen,

D) oder mit aus den erwähnten Bausteinen hergestellten höhermolekularen LCP

in der Schmelze zur Reaktion gebracht werden.

Weiterhin ist es möglich, bei der Herstellung der PAS/LC-Polymer-Pfropfcokondensate alle Reaktionskomponenten zu Beginn der Reaktion zusammenzugeben.

Es ist auch möglich, die PAS-Rückgrate erst zu einem späteren Reaktionszeitpunkt, wenn sich bereits oligomere LCP-Ketten gebildet haben, dem Reaktionsgemisch zuzufügen.

Schließlich ist es ebenfalls möglich, die Schmelzumesterung von hochmolekularen LC-Polymeren mit funktionalisierten PAS-Rückgraten auf einem Extruder durchzuführen.

Die Umsetzungen erfolgen bei Temperaturen von 200-250 °C, bevorzugt bei 250-330 °C.

Die üblichen Katalysatoren zur Herstellung von Polykondensaten können in Mengen von 0,005-5 %, bezogen auf die Gesamtmenge, zugegeben werden.

Die erfindungsgemäßen Pfropfcokondensate weisen gegenüber üblichen LCP-Polymeren den Vorteil einer verbesserten Randfaserdehnung bei gutem Modulniveau auf. Ferner weisen sie gegenüber PAS-LCP-Blends ohne Ankopplung eine höhere Wärmestandfestigkeit auf.

Sie können z.B. anstelle von üblichen LC-Polyestern, vorteilhaft zur Herstellung von Formkörpern und Halbzeugen, Folien und Fasern eingesetzt werden.

Sie können mit LC-Polyestern und/oder Polyarylensulfiden gemischt werden. Zur Verstärkung können Glasfasern, Kohlefasern und/oder andere übliche Verstärkungsstoffe, wie z.B. Glimmer oder Talkum, eingesetzt werden.

## Beispiele

Der flüssig-kristalline Zustand von Polymerschmelzen läßt sich mit Hilfe eines Polarisationsmikroskops untersuchen: Für die Untersuchungen war das Okular mit einem Aufsatz ausgerüstet, der eine Fotodiode im Brennpunkt der Okularlinse angeordnet enthielt. Anhand eines nachgeschalteten Meßverstärkers mit Regeleinrichtung wurde der Meßwert am eingeschalteten Mikroskop bei parallel angeordneten Nicolschen Prismen in Abwesenheit einer Materialprobe auf 100 Skalenteile eingestellt. Bei gekreuzten Nicolschen Prismen ergab sich dann ein Wert von 0,01 Skalenteilen.

Die Untersuchung der Polykondensate erfolgte nach dem Aufschmelzen der Proben bei Temperaturen zwischen 280 und 400 °C. Sofern in diesem gesamten Bereich oder in einem Teil davon eine Aufhellung der zwischen den gekreuzten Nicolschen Prismen beobachteten Schmelze auftrat, wurde das Polykondensat als thermotrop flüssig-kristallin eingestuft.

Die flüssig-kristallinen Polykondensate zeigen in der Meßanordnung Werte über 1 Skalenteil, meist Werte von 3 bis 90 Skalenteilen. Für amorphe Schmelzen, z.B. aromatische Polycarbonate, wurden dagegen Werte von weniger als 0,1 Skalenteilen gefunden.

Die oben beschriebene Methode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüssig-kristalliner Komponenten mittels Röntgenweitwinkelstreuung in der Schmelze nachzuweisen, wie es z.B. bei G.W. Gray und P.A. Windsor, "Plastic Crystals, Physico-Chemical Properties and Methods of Investigation", insbesondere Chapter 3, John Wiley and Sons, New York, Sydney, Toronto 1974, beschrieben ist.

### Herstellung der carboxylmodifizierten Polyphenylensulfide

### Beispiel 1

Auf einem Doppelwellenextruder (USK 32, Werner und Pfleiderer) werden 99 Gew.-% eines Polyparaphenylensulfids der Schmelzviskosität 40 Ps (306 °C, Scherung 1000 l/s) mit 1 Gew.-% 4-Nitro-naphthalin-1,8-disäureanhydrid bei 320 °C extrudiert.

Beispiel 2

Man verfährt wie in Beispiel 1 beschrieben. Statt 4-Nitro-naphthalin-1,8-disäureanhydrid wird 1 Gew.-% 4-Sulfophthalsäure eingesetzt.

Beispiel 3

Man verfährt wie in Beispiel 1 beschrieben. Statt 4-Nitro-naphthalin-1,8-disäureanyhdrid wird 1 Gew.-% 3-Sulfobenzoesäure eingesetzt.

Die dem PPS zugesetzten Substanzen sind aus den PAS der Beispiele 1 bis 3 zu höchstens 5 % der eingesetzten Menge mit Dioxan und/oder Wasser extrahierbar.

Herstellung der Pfropfcokondensate

Beispiel 4

Man versetzt die Mischung aus 2,25 Mol p-Hydroxybenzoesäure, 0,75 Mol 4,4'-Dihydroxybiphenyl, 0,45 Mol Terephthalsäure und 0,3 Mol Isophthalsäure mit 5 Mol Acetanhydrid, 0,02 Gew.-% Magnesiumacetat und 15 Gew.-% des modifizierten PPS aus Beispiel 1. Man erhitzt 45 Minuten auf 170 °C, 1 h auf 250 °C und eine weitere Stunde auf 330 °C, wobei im Laufe der letzten halben Stunde ein Vakuum von 1 mbar angelegt wird.

Beispiel 5

Man verfährt wie in Beispiel 4 beschrieben. Es werden statt des PPS aus Beispiel 1 15 Gew.-% des modifizierten PPS aus Beispiel 2 eingesetzt.

Beispiel 6

Man verfährt wie in Beisipel 4 beschrieben. Es werden statt des PPS aus Beispiel 1 15 Gew.-% des modifizierten PPS aus Beispiel 3 eingesetzt.

Vergleichsbeispiel 1 (reines LCP)

Man verfährt wie in Beispiel 4 beschrieben. Es wird kein PPS zugesetzt.

Vergleichsbeispiel 2 (LCP-PPS-Blend)

Man verfährt wie in Beispiel 4 beschrieben. Es werden statt des PPS aus Beispiel 1 15 Gew.-% nicht modifiziertes PPS zugesetzt (40 Pas, 306 °C, 1000 l/s).

Aus den Materialien der Beispiele 4, 5 und 6 und der Vergleichsbeispiele 1 und 2 werden 80 x 10 x 4 mm-Stäbe spritzgegossen und diese Stäbe hinsichtlich Wärmeformbeständigkeit (ISO 75, Methode A, HDT-A), Schlagzähigkeit (ISO 180) und des Verhaltens beim Biegeversuch mit Dreipunktauflage untersucht.

| Beispiel | Randfaser-dehnung (%) | Biegemodul (MPa) | Biegefestig-keit (MPa) | Schlagzähigkeit ($kJ/m^2$) | HDT-A ($^oC$) (1% Randfaserd.) |
|---|---|---|---|---|---|
| 4 | 4,2 | 9000 | 153 | 64 | 256 |
| 5 | 3,7 | 8500 | 147 | 52 | 251 |
| 6 | 4,2 | 7700 | 139 | 67 | 248 |
| Vgl. 1 | 2,7 | 8200 | 125 | 24 | 243 |
| Vgl. 2 | 1,6 | 5100 | 65 | 7 | 155 |

Die erfindungsgemäßen Pfropfcokondensate sind LCP-Polymeren besonders in bezug auf Randfaserdehnung überlegen. LCP-PPS-Blends sind den erfindungsgemäßen Pfropfcokondensaten in jeder Beziehung unterlegen.

Die erfindungsgemäßen Pfropfcokondensate (Beispiele 4-6) weisen eine LC-typische Eigenfarbe (hellbeige ) auf.

## Patentansprüche

1. Pfropfcokondensate aus mit Carboxylgruppen und/oder und/oder Dicarbonsäureanhydridgruppen und/oder Hydroxygruppen und/oder Aminogruppen modifizierten Polyarylensulfidrückgraten der Schmelzviskositäten 5-1000 Pas (gemessen bei 306 °C und 1000 $sec^{-1}$ Scherung und flüssigkristallinen Polyester(LCP)-Seitenketten, welche erhältlich sind, indem die modifizierten Polyarylensulfidrückgrate mit
   A aromatischen Hydroxy- oder Aminocarbonsäuren, Diphenolen, Aminophenolen, aromatischen Dicarbonsäuren oder Kohlensäureestern
   B oder deren OH-funktionalisierten Derivaten wie z.B. Estern mit aliphatischen Carbonsäuren oder aromatischen Dicarbonsäuren, bevorzugt mit Acetaten oder Diacetaten,
   C oder den entsprechenden an der Carboxylgruppe derivatisierten Verbindungen, bevorzugt Arylestern mit Diphenolen oder Aminophenolen,
   D oder mit aus den erwähnten Bausteinen hergestellten höhermolekularen LCP

   unter geeigneten Reaktionsbedingungen so zur Reaktion gebracht werden, daß eine kovalente Bindung zwischen den Polyarylensulfidrückgraten und LCP-Seitenketten gebildet wird, wobei der Gewichtsanteil der Polyarylensulfidrückgrate 3-97 % am Pfropfcokondensat beträgt und wobei die modifizierten Polyarylensulfidrückgrate durch Reaktion von 0,5-10 Gew.-% an Sulfonsäure- oder Nitrogruppenhaltigen Aromaten der Formel (I)

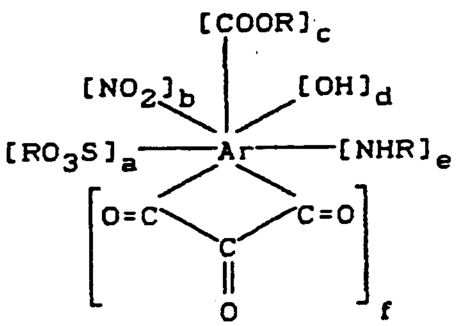

(I),

   wobei
   Ar für einen $C_6$-$C_{20}$-Arylrest steht,
   R Wasserstoff, einen $C_1$-$C_{22}$-Alkyl- oder einen $C_1$-$C_{14}$-Acyl- oder einen $C_6$-$C_{14}$-Arylrest bedeutet,
   a gleich 0, 1, 2 oder 3 ist,
   b gleich 0, 1, 2 oder 3 ist,
   c gleich 0, 1, 2 oder 3 ist,
   d gleich 0, 1, 2 oder 3 ist,
   e gleich 0, 1, 2 oder 3 ist,
   f gleich 0 oder 1 ist,

   die Summe (a + b) größer 0 und kleiner 4 ist und die Summe (c + d + e + f) größer 0 und kleiner 4 ist und die Summe (a + b + c + d + e + f) größer 1 und kleiner 7 ist und gegebenenfalls vorhandene freie Valenzen des Restes Ar durch Wasserstoff, $C_1$-$C_{22}$-Alkyl oder $C_6$-$C_{14}$-Aryl oder Halogen substituiert sind, mit Polyarylensulfiden bei Temperaturen oberhalb des Schmelzpunktes des jeweiligen Polyarylensulfids erhältlich sind.

2. Mischungen der Pfropfcokondensate nach Anspruch 1 mit LC-Polyestern und/oder Polyarylensulfiden.

3. Mischungen der Pfropfcokondensate nach Anspruch 1 mit Glasfasern, Kohlefasern und/oder anderen Verstärkungsstoffen, wie z.B. Glimmer oder Talkum.

4. Verwendung der Pfropfcokondensate nach Anspruch 1 zur Herstellung von Formkörpern, Halbzeugen, Folien und Fasern.

## Claims

1. Graft cocondensates of polyarylene sulphide backbones, modified with carboxyl groups and/or dicarboxylic acid anhydride groups and/or hydroxyl groups and/or amino groups, of melt viscosities 5-1000 Pa.s (measured at 306 °C and 1000 $sec^{-1}$ shear), and liquid-crystalline polyester (LCP) side chains, which are obtainable by reacting the modified polyarylene sulphide backbones with
   A aromatic hydroxy- or aminocarboxylic acids, diphenols, aminophenols, aromatic dicarboxylic acids or carbonic acid esters, or
   B OH-functionalised derivatives thereof, such as e.g. esters with aliphatic carboxylic acids or aromatic dicarboxylic acids, preferably acetates or diacetates, or
   C the corresponding compounds which are derivatised on the carboxyl group, preferably aryl esters with diphenols or aminophenols, or
   D relatively high-molecular-weight LCP's prepared from the above mentioned units
   under suitable reaction conditions so that a covalent bond is formed between the polyarylene sulphide backbones and LCP side chains, the proportion by weight of the polyarylene sulphide backbones in the graft cocondensate being 3-97 % and the modified polyarylene sulphide backbones being obtainable by the reaction of from 0.5 to 10 % by weight of aromatic compounds containing sulphonic acid groups or nitro groups as shown in formula (I):

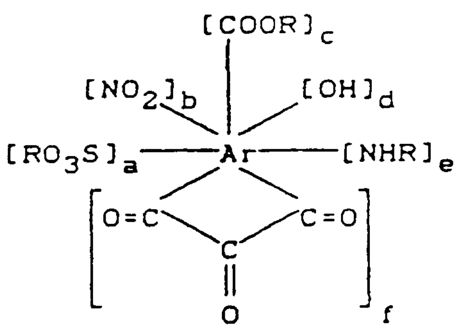

(I),

   wherein
   Ar stands for a $C_6$-$C_{20}$ aryl group,
   R stands for hydrogen, a $C_1$-$C_{22}$ alkyl group, a $C_1$-$C_{14}$ acyl group or a $C_6$-$C_{14}$ aryl group
   a stands for 0, 1, 2 or 3,
   b stands for 0, 1, 2 or 3,
   c stands for 0, 1, 2 or 3,
   d stands for 0, 1, 2 or 3,
   e stands for 0, 1, 2 or 3,
   f stands for 0 or 1,
   the sum (a + b) being greater than 0 and less than 4 and the sum (c + d + e + f) being greater than 0 and less than 4 and the sum (a + b + c + d + e + f) being greater than 1 and less than 7, and any free valencies present in the group Ar being substituted by hydrogen, $C_1$-$C_{22}$ alkyl, $C_6$-$C_{14}$ aryl or halogen, with polyarylene sulphides at temperatures above the melting point of the polyarylene sulphide used.

2. Mixtures of the graft cocondensates according to Claim 1 with LC polyesters and/or polyarylene sulphides.

3. Mixtures of the graft cocondensates according to Claim 1 with glass fibres, carbon fibres and/or other reinforcing materials, such as e.g. mica or talc.

4. Use of the graft cocondensates according to Claim 1 for the production of moulded articles, semifinished goods, sheet products and fibres.

## Revendications

**1.** Produits de co-condensation greffés constitués de poly(sulfures d'arylène) troncs modifiés par des groupes carboxy et/ou des groupes anhydride d'acide dicarboxylique et/ou des groupes hydroxy et/ou des groupes amino, ayant des viscosités en fusion de 5-1000 Pas (mesurées à 306°C et à un cisaillement de 1000 $s^{-1}$), et de chaînes latérales formées de polyesters cristaux liquides (PCL), que l'on peut obtenir en faisant réagir les poly(sulfures d'arylène) troncs modifiés avec

A) des acides hydroxy- ou aminocarboxyliques aromatiques, des diphénols, des aminophénols, des acides dicarboxyliques aromatiques ou des esters d'acides carboniques, ou

B) leurs dérivés fonctionnalisés sur OH comme, par exemple, des esters avec des acides carboxyliques aliphatiques ou avec des acides dicarboxyliques aromatiques, de préférence des acétates ou des diacétates, ou

C) les composés correspondants dérivés au niveau du groupe carboxy, de préférence des esters aryliques avec des diphénols ou des aminophénols, ou

D) des PCL de masse moléculaire élevée préparés à partir des unités constitutives indiquées,

dans des conditions réactionnelles appropriées, de façon qu'il se forme une liaison covalente entre les poly(sulfures d'arylène) troncs et les chaînes latérales PCL, la proportion en masse des poly(sulfures d'arylène) troncs étant de 3-97 % du produit de co-condensation greffé, et les poly(sulfures d'arylène) troncs modifiés pouvant être obtenus par réaction de 0,5 à 10 % en masse de composés aromatiques contenant des groupes acide sulfonique ou nitro de formule (I)

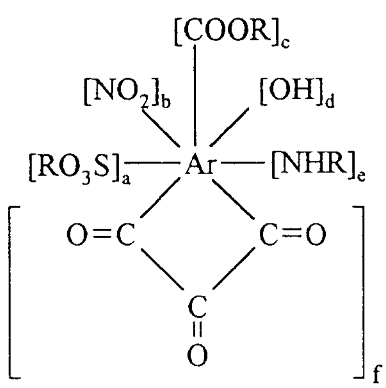

(I),

dans laquelle

Ar représente un reste aryle en $C_6$-$C_{20}$,
R représente un hydrogène ou un reste alkyle en $C_1$-$C_{22}$, acyle en $C_1$-$C_{14}$ ou aryle en $C_6$-$C_{14}$,
a est égal à 0, 1, 2 ou 3,
b est égal à 0 ,1, 2 ou 3,
c est égal à 0, 1, 2 ou 3,
d est égal à 0, 1, 2 ou 3,
e est égal à 0, 1, 2 ou 3,
f est égal à 0 ou 1,

la somme (a + b) est supérieure à 0 et inférieure à 4, et la somme (c + d + e + f) est supérieure à 0 et inférieure à 4, et la somme (a + b + c + d + e + f) est supérieure à 1 et inférieure à 7, et les valences libres éventuellement présentes du reste Ar sont substituées par l'hydrogène, des restes alkyle en $C_1$-$C_{22}$, aryle en $C_6$-$C_{14}$ ou halogène,

avec des poly(sulfures d'arylène), à des températures supérieures au point de fusion du poly(sulfure d'arylène) correspondant.

**2.** Mélanges des produits de co-condensation greffés selon la revendication 1 avec des polyesters cristaux liquides et/ou des poly(sulfures d'arylène).

**3.** Mélanges des produits de co-condensation greffés selon la revendication 1 avec des fibres de verte, des fibres de carbone et/ou d'autres produits renforçants comme, par exemple, le mica ou le talc.

4. Utilisation des produits de co-condensation greffés selon la revendication 1 pour la préparation de corps moulés, de demi-produits, de feuilles et de fibres.